# EUROPEAN PATENT APPLICATION

(11) **EP 4 393 671 A1**
(43) Date of publication of application: **03.07.2024**
(21) Application number: 22861635.5
(22) Date of filing: 18.08.2022
(51) Int. Cl.: B28D 1/06, B23D 49/00

(54) **WIRE SAW STONE CUTTING MACHINE AND CUTTING METHOD**

(30) Priority: 23.08.2021 KR 20210110669
(71) Applicant: Choi, Tae Seong, Nonsan-si, Chungcheongnam-do 33008 (KR)
(72) Inventor: Choi, Tae Seong, Nonsan-si, Chungcheongnam-do 33008 (KR)
(74) Representative: Isarpatent
(86) International application number: PCT/KR2022/012352
(87) International publication number: WO 2023/027425

(57) **Abstract**

The present invention relates to a stone cutting machine having a wire saw and, more specifically, to a stone cutting machine for cutting stones through vertically-reciprocative swinging. According to the present invention, stone loss due to cutting is minimized such that costs are reduced up to approximately 90%, and sludge is reduced such that work costs (labor costs) and disposal costs are reduced and environmental pollution is prevented.

## Description

### Technical Field

The present disclosure relates to awire saw stone cutting machine, and more specifically, to a wire saw stone cutting machine which cuts stones through a vertically-reciprocative swingmotion departing from all conventional stone cutting methods.

### Background Art

In general, stones such as marble or granite used for construction materials are quarried into a cuboid shape at a quarry, and then, are cut into panels using a cutting machine.

In this instance, the stone cutting machine typically includes: four vertical supports; horizontal supports respectively installed on the vertical supports to move vertically along the vertical supports; and cutting means installed to reciprocate horizontally along the horizontal supports.

However, one of the major problems pointed out in stone processing is that it is difficult to cut stones into thin thickness. So, diamond saw blades or gang saw type iron plates get relatively thicker, thus leading to significant loss of stone due to cutting.

A conventional stone cutting machine for cutting stones into thin slabs or a predetermined thickness uses a circular shank. The conventional circular shank for cutting stones has a thickness of 5 to 10mm, and can cut when a diamond tip applied on the circular shankhas a thickness of 7 to 12 mm.

For example, when a 20mm stone slab is cut, approximately 30% of the original stone compared to a product is lost due to the 6 to 7mm thickness of the saw blade, thus resulting in high cutting costs and considerable expenses for handling stone sludge generated during operation. Accordingly, the competitiveness of the stone industry is deteriorated.

To overcome the above problems, the inventor of the present invention has developed a method of cutting stones by horizontally rotating a wire saw using a rotating roller as disclosed in Korean Patent No. 10-0415479.

However, the method, which uses a saw blade made with a thin steel sheet, fails to provide sufficient tension for cutting, so cut portions are uneven and warped or twisted. Accordingly, the method makes it impossible to produce high-quality stone slabs.

Meanwhile, a multi-blade stone cutting machine includes a plurality of diamond cutting tools for cutting stones, which are combined and perform a rotating motion to process stones into a panel shape. Korean Patent No. 10-1301778 discloses a multi-blade stone cutting machine, in which the rotation center of a rotary shaft providing rotational force and the rotation center of a rotary shaft supported on another part are maintained constant. However, as a cutting unit cuts stones through circular rotation, there is a significant loss of stones, and the harmfulness caused by sludge generated during cutting still remains unresolved.

### Disclosure

### Technical Problem

The conventional arts introduced above still have difficulties in minimizing stone loss during cutting work and in producing producing high-quality stone slabs with uniform thickness. Therefore, there is a pressing demand for the development of a stone cutting method capable of overcoming the problems.

### Technical Solution

The present invention can reduce stone loss and provide stone slabs with excellent quality by cutting stones through the following method.

That is, the present invention provides a method for cutting stones vertically through a vertically-reciprocative swing motion of a wire saw attached by applying or welding a diamond alloy to a metal steel sheet of a thickness of 3 mm or less.

In another embodiment of the present invention, the present invention provides a wire saw stone cutting machine, including two or more wire saws as cutting means mounted on the wire saw support part, wherein the wire saws perform a vertically-reciprocative swing motion to vertically cut stones.

Additionally, the wire saw stone cutting machine further includes one or more pressure rollers, which are made of rubber or an elastic material and is capable of pressing the top of the stone slab to prevent the cut stone slab transported to the opposite side after passing through the wire saws installed at the center from falling down or shaking.

In a further embodiment of the present invention,the wire saw stone cutting machine includes a first carriage on which the stone is loaded before cutting, and a second carriage, which transports the stone slab cut while passing the wire saw installed at the center until the cutting of the stone is complete, at the same speed as the first carriage.

### Advantageous Effect

According to an embodiment of the present invention, the wire saw stone cutting machine equipped with the wire saw can increase stone production and reduce required costs by minimizing stone loss due to cutting work, and can enhance worker safety, save labor costs, and reduce sludge disposal expenses by reducing sludge generated during operations.

The effects of the present invention are not limited to the above-mentioned effects, and other effects, which are not specifically mentioned herein, will be clearly understood by those skilled in the art from the following description.

### Description of Drawings

FIG. 1 is a diagram illustrating a shape of a wire saw of the present invention.
FIG. 2 is a diagram illustrating a movement direction of a wire saw according to another embodiment of the present invention.
FIG. 3 is a top view illustrating a cutting machine equipped with a plurality of wire saws according to an embodiment of the present invention.
FIG. 4 is a conceptual diagram of a stone cutting machine havinga pressing roller, viewed from the side.

### Mode for Invention

The present invention can undergo various modifications and have various embodiments. Specific embodiments are illustrated in the drawings and are described in detail. However, it is not intended to limit the invention to the specific embodiments. It should be understood to encompass all modifications, equivalents, or alternatives falling within the technical concept and scope of the present invention, and the embodiments according to the present disclosure may be modified in a variety of different forms, and it should be understood that interpretation of the scope of the present disclosure is not limited to the following embodiments.

Hereinafter, embodiments according to the present invention will be described in detail with reference to the accompanying drawings. Identical reference numerals are assigned to components that are the same or correspond regardless of drawing symbols, and redundant explanations thereof will be omitted.

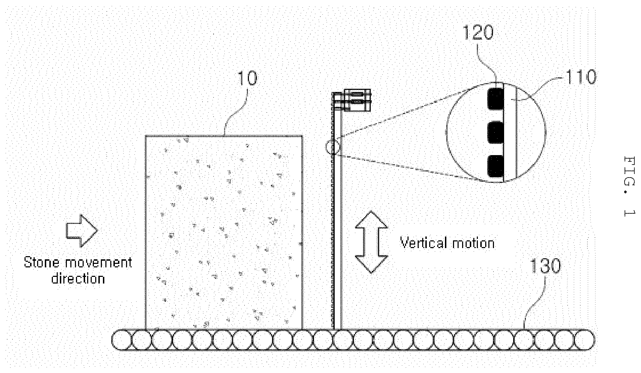

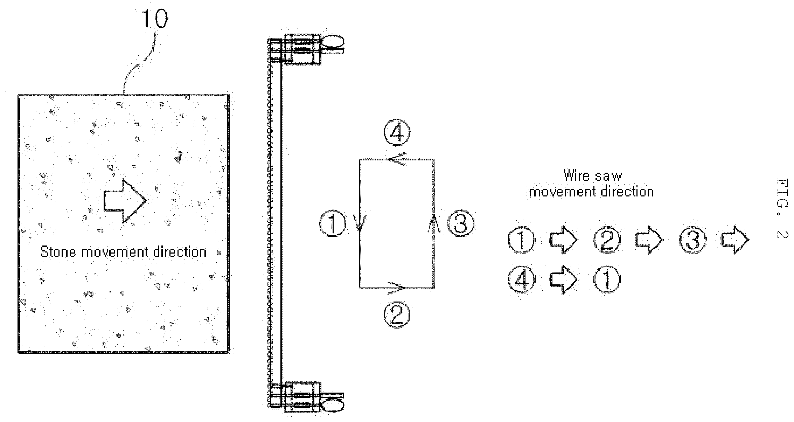

FIG. 1 is a diagram illustrating a shape of a wire saw of the present invention, and FIG. 2 is a diagram illustrating a movement direction of a wire saw according to another embodiment of the present invention.

First, referring to FIG. 1, a wire saw110 of the present invention is made of a thin metal sheet (such as carbon steel) with a thickness of 3mm or less. Diamond alloy with high strength is applied to the metal sheetat regular intervals, or a cutting tip 120is welded to cut stones by the cutting tip.

Meanwhile, in case of damage to the wire saw 110, the top and bottom of the wire saw 110 can be fixed to a fastening part (not shown) connected to awire saw support part100 by a fastening method for easy replacement.

In this instance, a rough stone 10which will be cut is typically marble, granite, or any other cuttable stone without restriction in the types of stones.

The conventional multi-blade stone cutting machine includes a plurality of diamond cutting tools combined to cut stones, and processes the stones into panel shapes by rotating or moving thediamond cutting tools horizontally. Such a conventional stone cutting method often results in significant stone loss, and environmental pollution due to excessive sludge generation.

On the other hand, when using the wire saw 110 of the present invention, cut portions of the stone being cut almost matches the thickness of the wire saw, thereby dramatically reducing the amount of stone lost.

Meanwhile, like the conventional method disclosed in Korean Patent No. 10-0415479, when the horizontal cutting method is used and excessive pressure is applied to operate the wire saw, the wire saw may be warped or twisted. In other words, in the conventional method, the diamond tip is attached to a long steel sheet, and then, lowers downward while rotating, to cut stones in the horizontal direction. In this instance, the diamond tip is warped or twisted due to lack of required tension force. Accordingly, it is impossible to produce high-quality panels.

On the other hand, when using the wire saw 110 of the present invention, the stone is gradually cut as the wire saw blade swings vertically as illustrated in FIG. 1. Thevertically-reciprocative swing motion can provide the wire saw with the tension required for cutting a stone slab with high quality.

The vertical reciprocating motionof the wire saw 110 is achieved by a crank mechanism 140 installed in the stone cutting machine, namely, the rotational motion of a motor (not shown) is converted into the vertical reciprocating motion by the crank mechanism 140 so that the wire saw 110can cut stones.

According to an embodiment of the present invention, the wire saw 110 repeats a swinging motion from top to bottom while the rough stone 10 moves slightly forward in the direction of the wire saw 110 so that the wire saw 110can cut the stone. In this instance, the forward speed of the stone is preferably approximately 4m per 24 hours (approximately 2.8mm per minute).

Such a method provides tension force necessary for cutting stones to the wire saw 110with ease, thereby enabling production of stone slabs with high-quality without warping or twisting in the cutting area.

Meanwhile, the movement of the stone blocks is carried out by a stone movement device 130. The stone movement device 130 may typically usea moving roller, although any device capable of transporting heavy stones, such as a carriage, can be used without limitation in types.

FIG. 2 illustrates the movement direction of the wire saw110 according to another embodiment of the present invention.

Referring to FIG. 2, the movement direction of the wire saw110 can be set differently from the vertical reciprocating motion that repeats the vertical movement motionillustrated in FIG. 1.

For example, as shown in direction ① of FIG. 2, the wire saw can be directed downward to cut a portion of the stone, and returns to its original position while moving in a parallelogram shape in the order of ②③④. Thereafter, the wire sawisoperatedagain to cut the stonefrom top to bottom. In this case, the wire saw 110 or the cutting tip 120getting in contact with the stone always touches the stone only downward.

The advantage of the method is to minimizescattering of sludge during stone cutting. Because, typically at a worksite, water is sprayed downward onto the stone during cutting to prevent the dispersion of rock particles, when the wire saw 110 moves in the same direction as the downward flow of water, sludge scattering can be minimized.

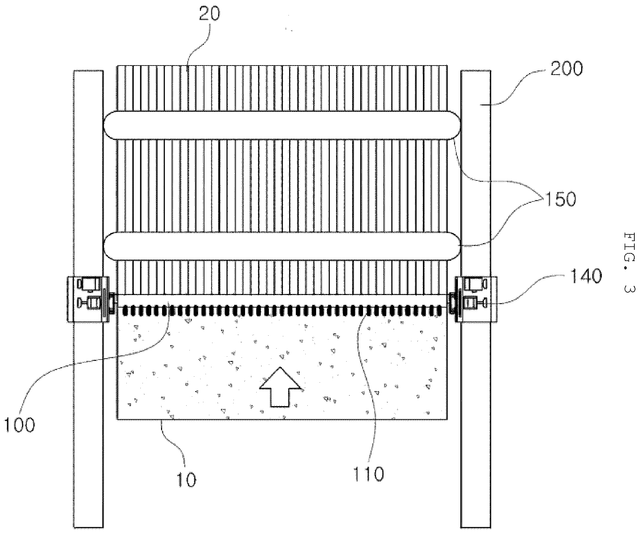

FIG. 3 is a top view of a wire saw cutting machine in which a plurality of wire saws 110 are coupled and mounted to the wire saw support part 100. In the drawing, the stone moves from the bottom to the top of the cutting machine.

Referring to FIG. 3, the wire sawstone cutting machine of the present invention can determine the cutting thickness of the stone by designing a spacing interval between two or more wire saw blades 110 as desired. the wire sawstone cutting machine can be variously manufactured according to the size of the stone to be cut, and can be replaced witha conventional circular shank type cutting machine in the stone cutting field and in the stone processing field.

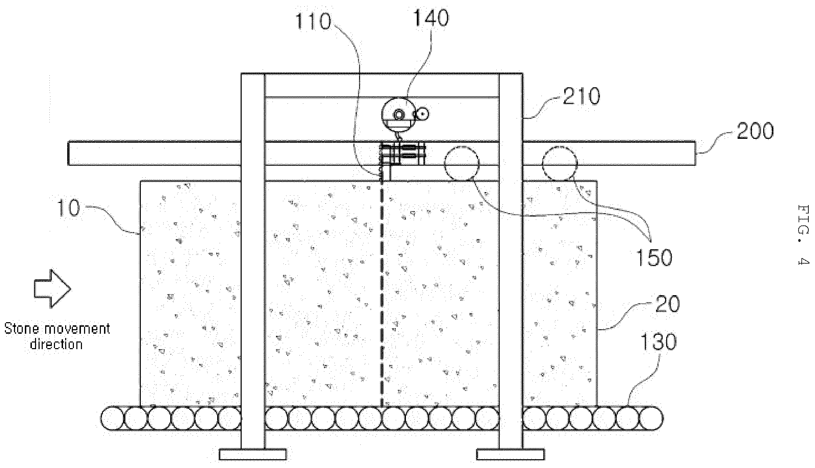

FIG. 4 is a conceptual diagram of a stone cutting machine havinga pressing roller, viewed from the side.

Referring to FIG. 4, as the stone 10 moves gradually towards the wire saw110located in the center of the stone cutting machine by the stone movement device 130 located at the bottom of the stone, when the wire saw110performs the vertically-reciprocative swing motion, the surface of the stone is cut by the cutting tip 120 attached to the wire saws 110, thereby creating a groove.

As the wire saw110repeats the vertically-reciprocative swing motion, the groove created is gradually enlarged until the stone 10 passing through the wire saw110 is cut to the desired thickness. A stone slab 20 that has passed through the wire saw110 continues to move for further processing.

If a carriage is used for stone movement, a first carriage (not shown), which carries the stone before cutting, and a second carriage (not shown), which transports the cut stone slab until the cutting of the stone is complete, must move at the same speed.

Here, the first carriage and the second carriageare not limited in form and may be connected to each other, if the carries can slowly move the rough stone10 or the stone slab 20.

As a result, the rough stones move slowly forward toward the wire saw at a constant speed by the stone movement device 130 at the bottom of the stone, and in accordance with the vertically-reciprocative swing motion of the plurality of wire saws horizontally installed at regular intervals, the stones are cut into slabs of the desired thickness all at once.

Meanwhile, as the stone 10 is cut by the wire saw intoa flat stone slab 20, when the stone slab reaches a considerable distance away from the wire saws, the stone may collapse due to vibrations or other factors.

To prevent the cut stone slab 20 transported to the opposite side after the cutting process from falling down or shaking, the wire saw stone cutting machine according to the present invention can include one or more pressure rollers 150capable of pressing the top of the stone slab without damaging the stone slab. The pressure rollers 150are preferably made of rubber or an elastic material. The pressing rollers 150 press the stone slab such that the moving stone slab 20 is prevented from falling sideways.

In this case, if necessary, one or more pressure rollers 150 may also be provided for the stability of the stone before cutting. That is, multiple pressure rollers 150 may be installed front and back around the wire saws.

In addition, a suction device (not shown) which holds the stone slab 20 by the vacuum absorption method may be further installed on the left and right sides of the wire saw stone cutting machine to prevent the cut stone slabs20 located at the right and left ends from falling outward during the movement.

While the present disclosure have been described with reference to particular details such as specific elements, the embodiments, and the drawings as described above, the embodiments are provided only to help the overall understanding of the present disclosure, and the present disclosure is not limited to the embodiments.It is evident to those skilled in the art that other variations based on the technical concept of the present invention can be practiced in the technical field to which the present invention belongs.

## Claims

1. A method of cutting stones, comprising:
preparing a wire saw by applyingor welding a diamond alloy to a metal steel sheet of a thickness of 3mm or less, and cutting stones vertically through a vertically-reciprocative swing motion of the wire saw.

2. The method according to claim 1, wherein the wire saw includes a fastening part connected to awire saw support part for easy replacement in case of breakage.

3. The method according to claim 1, wherein the stone includes any rough stone, such as marble or granite.

4. Awire saw stone cutting machine, comprising two or more wire saws as cutting means mounted on the wire saw support part, wherein the wire saws perform a vertically-reciprocative swing motion to vertically cut stones.

5. The wire saw stone cutting machineaccording to claim 4, further comprising one or more pressure rollers, which are made of rubber or an elastic material and is capable of pressing the top of the stone slab to prevent the cut stone slab transported to the opposite side after passing through the wire saws installed at the center from falling down or shaking.

6. The wire saw stone cutting machineaccording to claim 4 or 5, further comprising a first carriage on which the stone is loaded before cutting and which moves toward the wire saws and a second carriage on which the cut stone slab is loaded and which moves in the opposite direction to the wire saws, wherein the moving speed of the first carriage and the moving speed of thesecond carriage are the same.

7. The wire saw stone cutting machineaccording to claim 6, further comprising moving rollers for transporting the stone instead of the first and second carriages.
